(19) Europäisches Patentamt
European Patent Office
Office européen des brevets

(11) Veröffentlichungsnummer: **0 012 352**
**B2**

(12) # NEUE EUROPÄISCHE PATENTSCHRIFT

(45) Veröffentlichungstag der neuen Patentschrift: **08.06.88**

(51) Int. Cl.⁴: **C 08 G 18/18**

(21) Anmeldenummer: **79104940.6**

(22) Anmeldetag: **05.12.79**

(54) **Verfahren zur Herstellung von in geschlossenen Formen geschäumten Polyurethan-Kunststoffen.**

(30) Priorität: **16.12.78 DE 2854384**

(43) Veröffentlichungstag der Anmeldung: **25.06.80 Patentblatt 80/13**

(45) Bekanntmachung des Hinweises auf die Patenterteilung: **07.04.82 Patentblatt 82/14**

(45) Bekanntmachung des Hinweises auf die Entscheidung über den Einspruch: **08.06.88 Patentblatt 88/23**

(84) Benannte Vertragsstaaten: **BE DE FR GB IT NL**

(56) Entgegenhaltungen:
**DE-A-1 795 762**
**DE-A-2 139 317**
**DE-A-2 512 345**
**DE-A-2 544 567**
**DE-A-2 624 527**
**DE-B-1 237 777**
**FR-A-2 207 949**
**GB-A-908 337**
**US-A-3 772 222**
**US-A-4 102 719**

**Kunststoff-Handbuch Band VII, "Polyurethane", R. Vieweg und A. Höchtlen, Carl Hanser Verlag, München 1966, Seiten 96-102**
**Kogyo Kagatu Zasshi, Vol. 65, No. 9, Seite 1426-1430 (1962)**
**CHEMICAL ABSTRACTS, Band 58, Nr. 1, 21. Januar 1963, Columbus, Ohio, US, MAKOTO FUNATSU et al.: "The catalytic effects of tertiary amines on polyurethan reactions"**

(73) Patentinhaber: **BAYER AG, Konzernverwaltung RP Patentabteilung, D-5090 Leverkusen 1 Bayerwerk (DE)**

(72) Erfinder: **Sommerfeld, Claus- Dieter, Dr., Andreas-Gryphius- Strasse 22, D-5000 Köln 80 (DE)**
Erfinder: **Haas, Peter, Dr., Zwengenberger Strasse 43, D-5657 Haan 1 (DE)**
Erfinder: **Wagner, Kuno, Dr., Am Kiesberg 8, D-5090 Leverkusen (DE)**
Erfinder: **Kapps, Manfred, Dr., Hoppersheider Weg 55, D-5060 Bergisch- Gladbach 2 (DE)**

EP 0 012 352 B2

LIBER, STOCKHOLM 1988

**Beschreibung**

Verfahren zur Herstellung von in geschlossenen Formen geschäumten Polyurethan-Kunststoffen

Es ist eine Vielzahl von Katalysatoren für die Herstellung von Polyurethan-Kunststoffen bekannt geworden.

Mit den bekannten Katalysatoren gelang es bisher jedoch nicht, gleichzeitig folgende Eigenschaftsanforderungen bei Polyurethan-Kunststoffen:

-- sehr kurze Formverweilzeit

-- geringe Sprödigkeit

-- gute Haftung an Deckschichten wie phosphatierten bzw. lackierten Blechen, Melaminharzen, ABS und Polystyrol

-- Geruchsarmut

-- hervorragendes Fließvermögen und

-- niedrige Rohdichte

befriedigend zu erfüllen.

Überraschenderweise wurde gefunden, daß mit den erfindungsgemäß verwendeten Katalysatorkombinationen das Eigenschaftsbild von in geschlossenen Formen geschäumten Polyurethanschaumstoffen so eingestellt werden kann, daß gleichzeitig

-- eine sehr kurze Formverweilzeit

-- eine geringe Sprödigkeit

-- eine gute Haftung zu Deckschichten wie phosphatierten bzw. lackierten Blechen, Melaminharzen, ABS und besonders zu Polystyrol

- Geruchsarmut

-- ein hervorragendes Fließvermögen und

-- eine niedrige Rohdichte

erzielt werden kann.

Gegenstand der Erfindung ist daher ein Verfahren zur Herstellung von in geschlossenen Formen geschäumt Polyurethan-Kunststoffen durch Umsetzung von Polyisocyanaten mit mindestens zwei gegenüber Isocyanaten reaktionsfähige Wasserstoffatome aufweisenden Verbindungen vom Molekulargewicht 400 - 10 000 in Gegenwart von Wasser und von Kombinationen von tertiären Stickstoff enthaltenden Vernetzungs- und Treibkatalysatoren, gegebenenfalls in Gegenwart von Kettenverlängerungsmitteln vom Molekulargewicht 32 - 400 und organischen Treibmitteln und Schaumstabilisatoren, dadurch gekennzeichnet, daß eine Kombination von 0,3 bis 5,0 Gewichtsteilen, bevorzugt 1,0 bis 3,0 Gewichtsteilen, des Vernetzungskatalysators der Formel

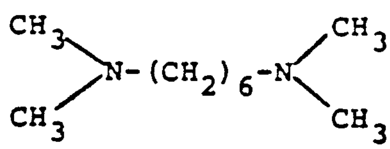

mit 0,1 bis 3,0 Gewichtsteilen, bevorzugt 0,3 bis 1,0 Gewichtsteilen, des Treibkatalysators der Formel

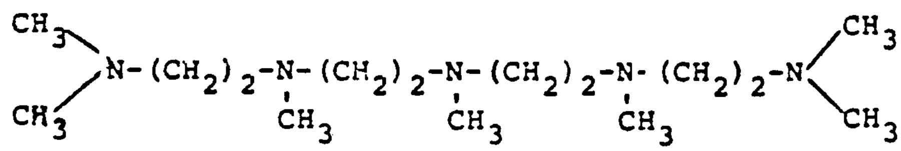

verwendet wird, wobei die angegebenen Gewichtsteile auf 100 Gewichtsteile der mindestens zwei aktive Wasserstoffatome aufweisenden Verbindungen vom Molekulargewicht 400 - 10 000 bezogen sind.

Durch die Kombination der erfindungsgemäßen Katalysatoren läßt sich die Vernetzungs- und Treibreaktion genau einstellen.

Die erfindungsgemäß mögliche spezifische Katalyse von Vernetzungs- und Treibreaktionen erlaubt es darüber hinaus, den Wasseranteil solcher Rezepturen um 10 bis 30 % zu vermindern, was im Schaumstoff eine deutliche Verbesserung der Wärmeleitzahl bewirkt.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q\,(NCO)_n$$

in der

n = 2-4, vorzugsweise 2,

und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder

einen araliphatischen Kohlenwasserstoffrest mit 8-15, vorzugsweise 8-13 C-Atomen,

bedeuten, z. B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4' -und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenylpolymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 450 400, 2 537 685 und 2 552 350 beschrieben werden, Norbornan-Diisocyanate gemäß US-Patentschrift 3 492 330, Allophanatgruppen ausweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweiseende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugte Polyisocyanate sind aromatische Polyisocyanate.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400 - 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1 000 bis 6 000, vorzugsweise 2 000 bis 4 000, z. B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan,

Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

b) Auch die erfindungsgemäß in Frage kommenden, mindestens zwei, in der Regel zwei bis acht, vorzugsweise zwei bis drei, Hydroxylgruppen aufweisenden Poyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Äthylenglykol, Propylenglycol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z. B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951), kommen erfindungsgemäß in Frage. Vielfach sind solche Polyäther bevorzugt, die überwiegend (bis zu 90 Gew.-%, bezogen auf alle vorhandenen OH-Gruppen im Polyäther) sekundäre oder primäre OH-Gruppen oder deren beliebige Einstellungen aufweisen. Auch OH-Gruppen aufweisende Polybutadiene sind erfindungsgemäß geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z. B. um Polythiomischäther, Polythioätherester oder Polythioätheresteramide.

d) Als Polyacetale kommen z. B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z. B. Trioxan (DE-Offenlegungsschrift 1 694 128) lassen sich erfindungsgemäß geeignete Polyacetale herstellen.

e) Als Hydroxylgruppen aufweisende Polycarbonate kommen solche der an sich bekannten Art in Betracht, die z. B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z. B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z. B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

h) Die genannten Polyhydroxylverbindungen können vor ihrer Verwendung im Polyisocyanat-Polyadditionsverfahren noch in der verschiedensten Weise modifiziert werden: So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxyl verbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-Offenlegungsschrift 1 694 152 (US-Patentschrift 3 625 871) beschrieben.

i) Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw.

Polykondensationsreaktionen (z. B. zwischen Formaldehyd und Phenolen und/oder Aminen) in situ in den oben genannten, Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemäße Verfahren geeignet. Bei Verwendung von Polyätherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620 und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in High Polymers, Vol. XVI, "Polyurethanes, Chemistry and Technology", verfasst von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400-10 000, z. B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethylhydrochinon, Äthanolamin, Diäthanolamin, N-Methyldiätanolamin, Triäthanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit") in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kuntstoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z.

B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylenhydrazide wie z. B. β-Semicarbazidopropionsäurehydrazid (DE-Offenlegungsschrift 1 770 591), Semicarbazidoalkylencarbazinester wie z. B. 2-Semicarbazidoäthyl-carbazinester (DE-Offenlegungsschrift 1 918 504) oder auch Amino-semicarbazid-Verbindungen wie z. B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Als weitere erfindungsgemäß geeignete niedermolekulare Polyole vom Molekulargewicht bis 400 Esterdiole der allgemeinen Formeln

$$HO-(CH_2)_x-CO-O-(CH_2)_y-OH$$

und

$$HO-(CH_2)_x-O-CO-R-CO-O-(CH_2)_x-OH$$

in denen

R einen Alkylenrest mit 1-10, vorzugsweise 2-6, C-Atomen bzw. einen Cycloalkylen- oder Arylenrest mit 6-10 C-Atomen

$x = 2\text{-}6$

und

$y = 3\text{-}5$

bedeuten,

z. B. δ-Hydroxybutyl-ε-hydroxy-capronsäureester, ω-Hydroxyhexyl-γ-hydroxybuttersäureester, Adipinsäure-bis-(β-hydroxyäthyl)-ester und Terephthalsäure-bis-(β-hydroxyäthyl)-ester;

Diolurethane der allgemeinen Formel

$$HO-(CH_2)_x-O-CO-NH-R'-NH-CO-O-(CH_2)_x-OH$$

in der

R' einen Alkylenrest mit 2-15, vorzugsweise 2-6, C-Atomen oder einen Cycloalkylen- oder Arylenrest mit 6-15 C-Atomen und

x eine Zahl zwischen 2 und 6

darstellen,

z. B. 1,6-Hexamethylen-bis-(β-hydroxyäthylurethan) oder 4,4'-Diphenylmethan-bis-(δ-hydroxybutylurethan);

sowie Diolharnstoffe der allgemeinen Formel

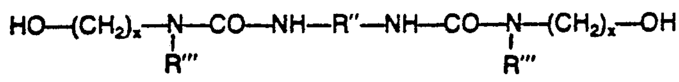

in der

R'' einen Alkylenrest mit 2-15, vorzugsweise 2-9, C-Atomen oder einen Cycloalkylen- oder Arylenrest mit 6-15 C-Atomen,

R''' Wasserstoff oder eine Methylgruppe und

x die Zahlen 2 oder 3

bedeuten,

z. B. 4,4'-Diphenylmethan-bis-(β-hydroxyäthylharnstoff) oder die Verbindurng

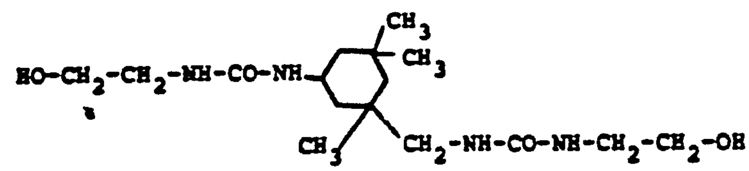

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butendiol-1,4 bzw. dessen Alkoxylierungsprodukte.

5. Gegebenenfalls als Hilfs- und Zusatzmittel:

a) Leicht flüchtige anorganische oder organische Substanzen als Treibmittel. Als organische Treibmittel kommen z. B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Katalysatoren der an sich bekannten Art, z. B. tertiäre Amine, wie Triäthylamin, Tributylamin, N-Methylmorpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diaza-bicyclo-(2,2,2)-octan, N-Methyl-N'-dimethylaminoäthyl-piperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyl-äthylamin, 1,2-Dimethylimidazol, 2-Methylimidazol, monocyclische und bicyclische Amidine (DE-Offenlegungsschritt 1 720 633), Bis-(dialkylamino)-alkyl-äther (US-Patentschrift 3 370 782, DE-Auslegeschrift 1 030 558, DE-Offenlegungsschriften 1 804 361 und 2 618 280) sowie Amidgruppen aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z. B. Triäthanolamin, Triisopropanolamin, N-Methyl-diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-Tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in den DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen, als Katalysatoren, verwendet werden. Als organische Zinnverbindungen kommen neben schwefelhaltigen

Verbindungen wie Di-n-octyl-zinn-mercaptid (DE-Auslegeschrift 1 769 367: US-Patentschrift 3 645 927) vorzugsweise Zinn(II)-salze von Carbonsäuren wie Zinn(II)-acetat, Zirin(II)-octoat, Zinn(II)-äthylhexoat und Zinn(II)-laurat und die Zinn(IV)-Verbindungen, z. B. Dibutylzinnoxid, Dibutylzinndichiorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsäures Diäthylamin oder stearinsaures Diäthanolamin infrage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxane, speziell wasserlösliche Vertreter infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vieifach über Allophanatgruppen verzweigte Polysiloxan-Polyoxyalkylen-Copolymere gemäß DE-Offenlegungsschrift 2 558 523.

d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trichloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Bei den in den Beispielen genannten Katalysatoren bzw. Katalysatorkombinationen handelt es sich um folgende Produkte ((T) = Treibkatalysator, (V) = Vernetzungskatalysator):

A. N,N,N',N'-Tetramethylhexamethylendiamin (V)

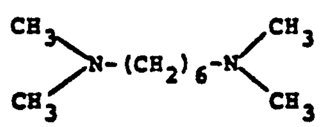

C. N,N,N',N'',N''-Pentamethyldiethylentriamin (T) (nicht erfindungsgemäß)

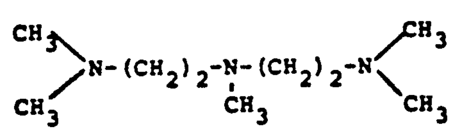

D. N,N,N',N'',N''',N'''',N''''-Heptamethyltetraethylenpentamin (T)

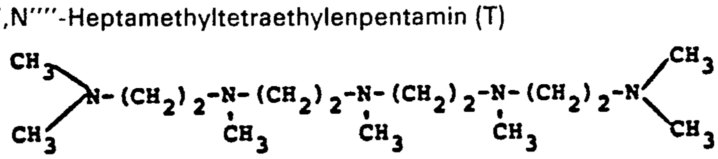

E. Dimethylcyclohexylamin (nicht erfindungsgemäß)

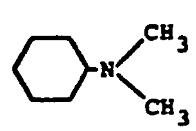

F. 1-Methylimidazol (nicht erfindungsgemäß)

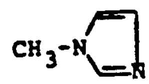

G. Triethylendiamin (nicht erfindungsgemäß)

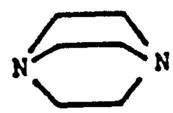

bevorzugt

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Erfindungsgemäß wird die Verschäumung in geschlossenen Formen durchgeführt. Dabei wird das Reaktionsgemisch in eine Form eingetragen. Als Formmaterial kommt Metall, z. B. Aluminium, oder Kunststoff, z. B. Epoxidharz, in frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z. B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z. B. aus den DE-Offenlegungsschriften 2 121 670 und 2 307 589 bekanntgeworden sind.

Die nach der Erfindung erhältlichen Produkte finden z. B. folgende Anwendung: Automobilsitze, Armlehnen, Bauelemente, Kühlmöbel, Tiefkühlhausisolierungen, Dämmplatten für die Bauindustrie; Bauplatten (Sandwich-Platten).

**Beispiel 1**

95 g eines Polyätherpolyols der Hydroxylzahl 425, das durch Anlagerung von Propylenoxid an eine Mischung aus Sucrose, Propylenglykol und Wasser erhalten worden ist,

1,5 g Wasser,

1,5 g eines Schaumstabilisators nach der DE-OS-2 029 293,

0,5 g N,N,N',N'',N''',N'''',N''''-Heptamethyltetraethylenpentamin (D)

1,7 g N,N,N',N'-Tetramethylhexamethylendiamin (A) und

38 g eines Fluorchlorkohlenwasserstoffs als Treibmittel werden gemischt.

Dieses Gemisch wird jeweils unter gleichen Bedingungen mit 133 g rohem 4,4'-Diisocyanatodiphenylmethan, welches durch Phosgenierung eines Anilin-Formaldehyd-Kondensates erhalten worden ist und einen NCO-Gehalt von 31 % aufweist, in einem Hochdruckverdüsungsmischkopf gut vermischt und in eine der nachstehend beschriebenen Formen eingetragen:

1. Papier (Test-) päckchen der Größe 20 x 20 x 14 cm zur Beurteilung der Start- und Abbindezeiten, der freien Rohdichte sowie Oberflächensprödigkeit nach dem Aushärten des Schaumstoffs.

2. Brettform, die aus einem senkrecht stehenden, auf 45°C geheizten Hohlkörper der Maße 200 x 20 x 5 cm besteht. Sie ist mit Papier ausgekleidet und weist vom oberen Ende vier Entlüftungslöcher von 5 mm Durchmesser auf. Der Eintrag erfolgt 35 cm über dem unteren Ende so daß der entstehende Schaumstoff senkrecht aufsteigen kann. Beurteilt werden die fertigen Schaumstoffbretter auf Schußgewicht, Fließhöhe, mittlere Rohdichte, Rohdichteverteilung, Druckfestigkeit, Zellgröße, Zellstruktur und Fließstörungen.

3. Plattenform der Größe 100 x 100 x 6 cm, in der Sandwichplatten mit 1 mm starken Stahlblechdeckschichten zur Ermittlung der Mindestformverweilzeit geschäumt werden. Unter Mindestformverweilzeit wird dabei die Zeit verstanden, die die Platte in einer vorgeheizten Form verbleiben

muß, um 30 Minuten nach dem Entformen keine Dickenquellung aufzuweisen. Aus den gemessenen Daten ergibt sich die Gesamtbeurteilung des Aktivators bzw. der Aktivatorenkombination. Die erhaltenen Ergebnisse sind in der Tabelle 1 gemeinsam mit den Vergleichsbeispielen 2-11 zusammengestellt; die Beurteilung von Oberflächensprödigkeit, Zellgröße, Zellstruktur und Gesamtbeurteilung erfolgte dabei nach folgendem Zahlenschlüssel:

Oberflächensprödigkeit
Note 1 = Oberfläche wird nicht spröde
Note 2 = Oberfläche wird nur für einen Zeitraum von 15 Minuten spröde
Note 3 = Oberfläche wird für einen Zeitraum von 15-60 Minuten spröde
Note 4 = Oberfläche bleibt über 60 Minuten spröde

Fließstörungen
Note 1 = keine Fließstörungen
Note 2 = geringe Fließstörungen
Note 3 = mittlere Fließstörungen
Note 4 = starke Fließstörungen

Zellgröße
Note 1 = sehr fein/kugelförmig
Note 2 = fein
Note 3 = mittelmäßig fein
Note 4 = grob

Zellstruktur
Note 1 = sehr regelmäßig
Note 2 = regelmäßig
Note 3 = unregelmäßig

Gesamtbeurteilung
Note 1 = sehr gut
Note 2 = gut
Note 3 = befriedigend bis ausreichend
Note 4 = mangelhaft

Die Ergebnisse sind in Tabelle 1 zusammengestellt.

**Beispiel 2** (Vergleichsbeispiel)
95 g Polyätherpolyol der Hydroxylzahl 425 nach Beispiel 1,
1,5 g Wasser,
1,5 g eines Schaumstabilisators nach der DE-OS-2 029 293,
0,5 g N,N,N',N'',N''-Pentamethyldiethylentriamin (C),
1,4 g N,N,N',N'-Tetramethylenhexamethylendiamin (A) und
38 g eines Fluorchlorkohlenwasserstoffs als Treibmittel werden gemischt.
Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt.

**Beispiel 3** (Vergleichsbeispiel)
95 g Polyätherpolyol der Hydroxylzahl 425 nach Beispiel 1,
1,5 g Wasser,
1,5 g eines Schaumstabilisators nach der DE-OS-2 029 293,
0,5 g N,N,N',N'',N''-Pentamethyldiethylentriamin (C),
2,0 g Dimelhylcyclohexylamin (E) und
38 g eines Fluorchlorkohlenwasserstoffs als Treibmittel werden gemischt.
Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirken sich besonders die schlechte Rohdichteverteilung und die lange Formverweilzeit aus.

**Beispiel 4** (Vergleichsbeispiel)
95 g Polyätherpolyol der Hydroxylzahl 425 nach Beispiel 1,
1,5 g Wasser,
1,5 g eines Schaumstabilisators nach der DE-OS-2 029 293,

2,9 g Dimethylcyclohexylamin (E) und
28 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirken sich besonders die starke Geruchsbelästigung selbst in frisch ausgehärteten Systemen sowie das verminderte Fließvermögen aus.

**Beispiel 5** (Vergleichsbeispiel)
95 g Polyätherpolyol der Hydroxylzahl 425 nach Beispiel 1,
1,5 g Wasser,
1,5 g eines Schaumstabilisators nach der DE-OS-2 029 293,
3,0 g 1-Methylimidazol (F) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirken sich besonders die grobe Zelle, das geringe Fließvermögen und die lange Formverweilzeit aus.

**Beispiel 6** (Vergleichsbeispiel)
95 g Polyätherpolyol der Hydroxylzahl 425 nach Beispiel 1,
1,5 g Wasser,
1,5 g eines Schaumstabilisators nach der DE-OS-2 029 293,
0,5 g N,N,N',N'',N''-Pentamethyldiethylentriamin (C),
1,5 g 1-Methylimidazol (F) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirken sich besonders das verminderte Fließvermögen und die lange Formverweilzeit aus.

**Beispiel 7** (Vergleichsbeispiel)
95 g Polyätherpolyol der Hydroxylzahl 425 nach Beispiel 1,
1,5 g Wasser,
1,5 g eines Schaumstabilisator nach der DE-OS-2 029 293,
2,3 g N,N,N',N'',N''',N'''',N''''-Heptamethyltetraethylenpentamin (D) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirkt sich besonders die große Sprödigkeit des Schaumes aus.

**Beispiel 8** (Vergleichsbeispiel)
95 g Polyätherpolyol der Hydroxylzahl 425 nach Beispiel 1,
1,5 g Wasser,
1,5 g eines Schaumstabilisator nach der DE-OS-2 029 293,
0,2 g Triethylendiamin (G),
1,8 g N,N,N',N'-Tetramethylhexamethylen-diamin (A) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirken sich besonders die grobe Zelle und das verminderte Fließvermögen aus.

**Beispiel 9** (Vergleichsbeispiel)
95 g Polyätherpolyol der Hydroxylzahl 425 nach Beispiel 1,
1,5 g Wasser,
1,5 g eines Schaumstabilisators nach der DE-OS-2 029 293,
0,9 g Triethylendiamin (G) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirkt sich besonders das sehr geringe Fließvermögen aus.

**Beispiel 10** (Vergleichsbeispiel)

95 g Polyätherpolyol der Hydroxylzahl 425 nach Beispiel 1,
1,5 g Wasser,
1,5 g eines Schaumstabilisators nach der DE-OS-2 029 293,
2,3 g N,N,N',N'-Tetramethylhexamethylen-diamin (A) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispiel 1 zeigen die Angaben der Tabelle 1 die Überlegenheit der erfindungsgemäßen Aktivatorkombination. Nachteilig wirkt sich besonders das geringe Fließvermögen aus.

**Beispiel 11** (Vergleichsbeispiel)

95 g Polyätherpolyol der Hydroxylzahl 425 nach Beispiel 1,
1,5 g Wasser,
1,5 g eines Schaumstabilisators nach der DE-OS-2 029 293,
1,8 g N,N,N',N'',N''-Pentamethyldiethylentriamin (C) und
38 g eines Fluorchlorkohlenwasserstoffs als Treibmittel werden gemischt.

Dieses Gemisch wird unter den Bedingungen, die im Beispiel 1 erwähnt sind, mit 133 g rohem 4,4'-Diisocyanatodiphenylmethan verschäumt. Die resultierenden Schaumstoffe werden analog zu Beispiel 1 geprüft und beurteilt. Im Vergleich zu dem Beispielen 1 zeigen die Angaben der Tabelle 1 die Überlegenheit der erfindungsgemäßen Aktivatorkombination. Nachteilig wirkt sich besonders die große Sprödigkeit des Schaumes aus.

**Tabelle 1**

| | Erfindungsgemäße Aktivatorkombination | | | | | Vergleichsbeispiele | | | | | |
|---|---|---|---|---|---|---|---|---|---|---|---|
| Beispiel | 1 | 2 | 3 | 4 | 5 | 6 | 7 | 8 | 9 | 10 | 11 |
| Aktivator (Kombination) | A/D | A/C | C/E | E | F | C/F | D | G/A | G | A | C |
| 1. Testpäckchen | | | | | | | | | | | |
| Startzeit (sec.) | 16 | 12 | 11 | 18 | 33 | 13 | 8 | 23 | 25 | 21 | 7 |
| Abbindezeit (sec.) | 100 | 100 | 100 | 100 | 100 | 100 | 100 | 100 | 100 | 100 | 100 |
| freie Rohdichte (kg/m³) | 22,2 | 21,6 | 21,4 | 21,5 | 23,4 | 20,8 | 21,7 | 22,2 | 23,4 | 21,4 | 23,0 |
| Oberflächensprödigkeit | 1 | 1 | 2 | 1 | 1 | 1 | 4 | 1 | 1 | 1 | 4 |
| 2. Brettform | | | | | | | | | | | |
| Schußgewicht (g) | 580 | 580 | 580 | 580 | 580 | 580 | 580 | 580 | 580 | 580 | 580 |
| Fließhöhe (cm) | 200 | 200 | 197 | 193 | 152 | 188 | 200 | 185 | 166 | 178 | 200 |
| mittlere Rohdichte (kg(m³) | 29 | 29 | 29,4 | 30 | 38,2 | 30,9 | 29 | 31,4 | 34,9 | 32,6 | 29 |
| Rohdichteverteilg. (kg/m³) | 20 ± 1 | 29 ± 1 | 27 ± 3 | 28 ± 2 | 34 ± 6 | 28 ± 3 | 27 ± 4 | 29 ± 3 | 30 ± 5 | 29 ± 4 | 27 ± 3 |
| Druckfestigkeit (MPa) | 0,14 | 0,15 | 0,13 | 0,11 | 0,08 | 0,10 | 0,12 | 0,09 | 0,07 | 0,09 | 0,012 |
| Zellgröße | 1 | 1 | 1 | 2 | 4 | 2 | 1 | 3 | 3 | 2 | 1 |
| Zellstruktur | 1 | 1 | 2 | 2 | 2 | 2 | 3 | 2 | 2 | 1 | 3 |
| Fließstörungen | 1 | 1 | 2 | 2 | 4 | 3 | 2 | 2 | 2 | 2 | 2 |
| 3. Plattenform | | | | | | | | | | | |
| Mindestformverweilzeit (Min.) | 4 | 4 | 5 | 4,5 | 6 | 5 | 4,5 | 5 | 5 | 4,5 | 5 |
| Gesamtbeurteilung | 1 | 1 | 3 | 2 | 4 | 4 | 3-4 | 3 | 4 | 3 | 3-4 |

**Patentanspruch**

Verfahren zur Herstellung von in geschlossenen Formen geschäumten Polyurethan-Kunststoffen durch Umsetzung von Polyisocyanaten mit mindestens zwei gegenüber Isocyanaten reaktionsfähige Wasserstoffatome aufweisenden Verbindungen vom Molekulargewicht 400 - 10 000 in Gegenwart von Wasser und von Kombinationen von tertiären Stickstoff enthaltenden Vernetzungs- und Treibkatalysatoren, gegebenenfalls in Gegenwart von Kettenverlängerungsmitteln vom Molekulargewicht 32 - 400 und organischen Treibmitteln und Schaumstabilisatoren, dadurch gekennzeichnet, daß eine Kombination von 0,3 bis 5,0

Gewichtsteilen, bevorzugt 1,0 bis 3,0 Gewichtsteilen, des Vernetzungskatalysators der Formel

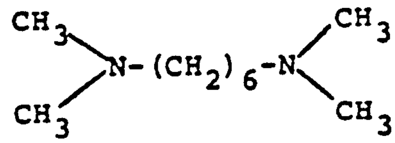

mit 0,1 bis 3,0 Gewichtsteilen, bevorzugt 0,3 bis 1,0 Gewichtsteilen, des Treibkatalysators der Formel

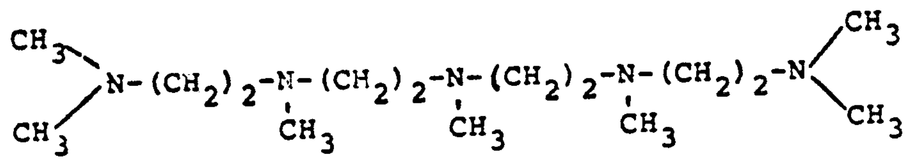

verwendet wird, wobei die angegebenen Gewichtsteile auf 100 Gewichtsteile der mindestens zwei aktive Wasserstoffatome aufweisenden Verbindungen vom Molekulargewicht 400 - 10 000 bezogen sind.

**Claim**

Process for the production of polyurethane plastics foamed in closed moulds by reacting polyisocyanates with compounds containing at least two isocyanate-reactive hydrogen atoms and having a molecular weight of 400 - 10,000 in the presence of water and combinations of cross-linking and blowing catalysts containing tertiary nitrogen, and if appropriate in the presence of chain-extending agents having a molecular weight of 32 - 400 and organic blowing agents and foam stabilisers, characterised in that a combination of 0.3 to 5.0 parts by weight, preferably 1.0 to 3.0 parts by weight, of the cross-linking catalyst of the formula

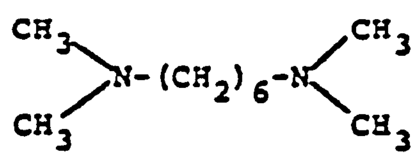

with 0.1 to 3.0 parts by weight, preferably 0.3 to 1.0 part by weight, of the blowing catalyst of the formula

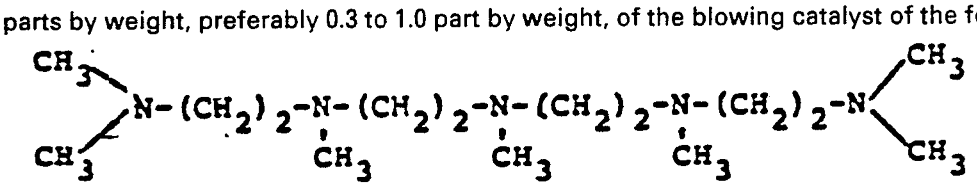

is used, the abovementioned parts by weight being based on 100 parts by weight of the compounds containing at least two active hydrogen atoms and having a molecular weight of 400 - 10,000.

**Revendication**

Procédé de production de matières plastiques du type polyuréthanne transformées en mousse en moules fermés, par réaction de polyisocyanates avec des composés portant au moins 2 atomes d'hydrogène aptes à réagir vis-à-vis d'isocyanates, d'un poids moléculaire de 400 à 10 000, en présence d'eau et d'associations de catalyseurs de réticulation et de formation de pores, contenant de l'azote tertiaire, le cas échéant en présence d'agents d'allongement de chaîne d'un poids moléculaire de 32 à 400 et d'agents organiques porogènes et stabilisants envers la mousse, caractérisé en ce qu'on utilise en association 0,3 à 5,0 parties en poids, de préférence 1,0 à 3,0 parties en poids, du catalyseur de réticulation de formule

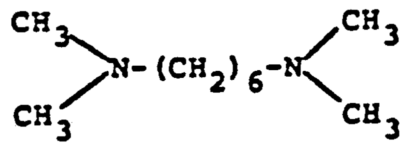

avec 0,1 à 3,0 parties en poids, de préférence 0,3 à 1,0 partie en poids du catalyseur de formation de pores de formule

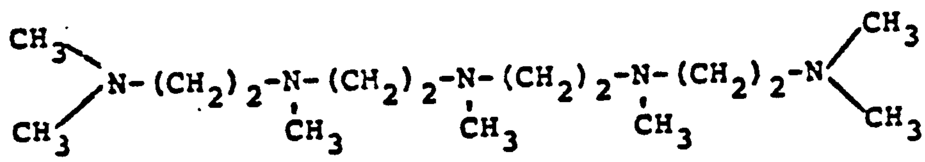

les parties en poids indiquées étant rapportées à 100 parties en poids des composés de poids moléculaire 400 - 10 000 portant au moins deux atomes actifs d'hydrogène.